# EUROPÄISCHE PATENTANMELDUNG

(11) **EP 4 726 382 A1**
(43) Veröffentlichungstag der Anmeldung: **15.04.2026**
(21) Anmeldenummer: 25206902.6
(22) Anmeldetag: 06.10.2025
(51) Int. Cl.: G01N 25/48

(54) **PROBENTRÄGERVORRICHTUNG FÜR MESSGERÄTE ZUR THERMISCHEN PROBENANALYSE, MESSGERÄT**

(30) Priorität: 10.10.2024 DE 102024129235
(71) Anmelder: Netzsch-Gerätebau GmbH, 95100 Selb (DE)
(72) Erfinder: Taubmann, Rebekka, 95100 Selb (DE); Gschwendtner, Reinhard, 95615 Marktredwitz (DE); Lauterbach, Stefan, 95182 Döhlau (DE); Timm, Stefan, 95028 Hof (DE); Hollering, Markus, 95632 Wunsiedel (DE)

(57) **Zusammenfassung**

Die vorliegende Erfindung betrifft eine Probenträgervorrichtung (1) für Messgeräte zur thermischen Probenanalyse. Diese Probenträgervorrichtung (1) umfasst dabei eine Hauptträgerstruktur (2), eine Referenzeinheit (5) mit einer ersten Thermoelementeinrichtung (11) und eine Probenträgereinheit (6) mit einer zweiten Thermoelementeinrichtung (12), wobei die Hauptträgerstruktur (2) ausgelegt ist, sowohl die Referenzeinheit (5) als auch die Probenträgereinheit (6) räumlich getrennt voneinander zu halten. Zwischen Referenzeinheit (5) und Probenträgereinheit (6) ist zudem ein definiertes Wärmestromelement (14) angeordnet. Zusätzlich wird ein Messgerät (100) zur thermischen Probenanalyse vorgestellt.

## Beschreibung

### TECHNISCHES GEBIET DER ERFINDUNG

Die vorliegende Erfindung betrifft eine Probenträgervorrichtung für Messgeräte zur thermischen Probenanalyse sowie ein Messgerät zur thermischen Probenanalyse.

### HINTERGRUND DER ERFINDUNG

Gerätschaften zur thermischen Probenanalyse sind bereits in vielfältigen Ausführungen bekannt und auf dem Markt erhältlich. Damit weitere Einsatzfelder für diese Technik erschlossen werden können, besteht aktuell nicht nur ein Bedarf, mehr Funktionen in jeweils eine Geräteeinheit zu integrieren, sondern gleichzeitig dabei eine kompaktere Bauweise hervorzubringen, sodass etwa auch mobile Einsätze in Zukunft ermöglicht werden können.

Aktuelle Gerätschaften weisen mitunter Dimensionen auf, welche als unhandlich und für neue Anwendungsfelder als hemmend wahrgenommen werden könnten. Auch weisen aktuelle Gerätschaften hinsichtlich der möglichen Analysetechniken meist lediglich eine bestimmte Auswahl auf, sodass für die Bereitstellung weiterer Analysetechniken entsprechend weitere Gerätschaften beschafft werden müssten.

Insofern sind Gerätschaften bekannt, die sich entweder ausschließlich für die Differenz-Thermoanalyse (DTA = Differenz-Thermoanalyse) beziehungsweise für die dynamische Differenzkalorimetrie (DSC = dynamische Differenzkalorimetrie) eignen oder für die Thermogravimetrie (TGA = thermogravimetrische Analyse) eignen. Die TGA dient zur temperatur- oder zeitabhängigen Untersuchung von physikalischen Vorgängen und chemischen Reaktionen, die mit Massenänderungen verbunden sind.

Die Unterschiede bestehen dabei häufig in der jeweiligen Handhabung von jeweiligen Proben. Insbesondere bei der DTA beziehungsweise bei der DSC wird eine aufwendigere Konstruktion benötigt, da beispielsweise Gerätschaften dafür in der Regel mit zwei Probentiegeln ausgestattet sind, wobei in dem einen Tiegel das zu analysierende Material vorgehalten wird und in dem anderen Tiegel das Referenzmaterial vorgehalten wird. Gerätschaften für die TGA benötigen dagegen in der Regel nur einen Tiegel für das zu analysierende Material. Essentiell für die TGA sind eine im Messgerät integrierte Waage, die die Masseänderungen der Probe detektiert, und die Temperaturmessung an der Probe.

Beim Aufbau für DTA beziehungsweise der DSC werden die beiden Tiegel dann gezielt und unter möglichst gleichen Bedingungen entweder erhitzt oder abgekühlt, wobei beide Tiegel hinsichtlich ihres thermischen Verhaltens bemessen werden, um somit Unterschiede im thermischen Verhalten der beiden Materialien zu ermitteln.

Bekannt sind auch Verfahren der simultanen thermischen Analyse (STA = simultane thermische Analyse), bei denen die Methoden DTA beziehungsweise DSC und TGA kombiniert werden.

Für zukünftige Gerätschaften, wäre es wünschenswert, einen einfacheren Aufbau bereitzustellen, welcher darüber hinaus auch weitergehende Analysemethoden ermöglichen kann.

### ZUSAMMENFASSUNG DER ERFINDUNG

Vor diesem Hintergrund liegt der vorliegenden Erfindung die Aufgabe zugrunde, eine Probenträgervorrichtung für Messgeräte zur thermischen Probenanalyse sowie ein Messgerät zur thermischen Probenanalyse bereitzustellen, welche zumindest teilweise die zuvor genannten Nachteile überkommen.

Diese Aufgabe wird gelöst durch eine Probenträgervorrichtung für Messgeräte mit den Merkmalen des Patentanspruchs 1 sowie durch ein Messgerät zur thermischen Probenanalyse mit den Merkmalen des Patentanspruchs 16.

Dementsprechend ist eine Probenträgervorrichtung für Messgeräte zur thermischen Probenanalyse vorgesehen, die eine Hauptträgerstruktur, eine Referenzeinheit mit einer ersten Thermoelementeinrichtung und eine Probenträgereinheit mit einer zweiten Thermoelementeinrichtung umfasst, wobei die Hauptträgerstruktur ausgelegt ist, sowohl die Referenzeinheit als auch die Probenträgereinheit räumlich getrennt voneinander zu halten. Zudem ist zwischen der Referenzeinheit und der Probenträgereinheit ein definiertes Wärmestromelement angeordnet.

Des Weiteren ist ein Messgerät zur thermischen Probenanalyse vorgesehen, welches eine erfindungsgemäße Probenträgervorrichtung umfasst sowie eine Gewichtsmesseinrichtung zur Erfassung einer Probenmasse einer zu untersuchenden Probe.

Eine der Erfindung zugrunde liegende Idee besteht in der Bereitstellung einer kompakten Probenträgervorrichtung, welche in Messgeräten zur thermischen Probenanalyse mit räumlich begrenzten Möglichkeiten komfortabel vorsehbar ist, ohne dabei allerdings Einbußen an der Funktionalität hinnehmen zu müssen.

Insbesondere können mittels der vorgestellten Erfindung trotz einer kompakten Bauordnung mit einer einfachen Referenzeinheit, welche keine Referenzprobe trägt, vorgesehene Messungen im Sinne einer dynamischen Differenzkalorimetrie (DSC) durchgeführt werden, da mittels des vorgesehenen definiertem Wärmestromelements erforderliche Kalibrierungsschritte vor einer ersten Probenanalyse einfach und bedienerfreundlich durchführbar sind.

In Abweichung von klassischen Definitionen der DSC-Methode ist in einer jüngeren grundlegenden Norm zu den Methoden DTA (DTA = Differenz-Thermoanalyse) und DSC (DIN 51007:2019-04) nicht von einem *"definiertem Wärmestrompfad"* die Rede, sondern vielmehr von einer klaren Trennung zwischen Differenz-Thermoanalyse (DTA) zur Messung der Temperaturdifferenz und Dynamischer Differenzkalorimetrie (DSC), die zusätzlich die Messung der Wärmestromdifferenz zwischen Probe und Referenz ermöglicht.

Letztendlich kommt es darauf an, die für eine Messung der Wärmestromdifferenz erforderliche Kalibrierung erstellen zu können. Das vorgesehene definierte Wärmestromelement kann insofern dieser Anforderung gerecht werden und für diese Zwecke mit Vorteil eingesetzt werden, ohne dass es dabei einer aufwendigen Konstruktion mit einer Referenzprobe in einem weiteren Probengefäß (Probentiegel) bedarf.

Die erfinderische Probenträgervorrichtung für Messgeräte zur thermischen Probenanalyse kann insofern mit Vorteil zur Messung einer Temperaturdifferenz und optional eines Wärmestromes zwischen einer Probe und einer Referenz eingesetzt werden, wobei die Referenz unveränderlich ist und über die Probenträgervorrichtung zumindest temporär fest mit dem jeweiligen Messgerät verbunden werden kann.

Gleichzeitig ist die erfinderische Probenträgervorrichtung ausgelegt, bei einer entsprechenden Anordnung in einem Messgerät zur thermischen Probenanalyse eine Messung einer jeweiligen Temperatur an einer Probe, welche etwa in einem Behälter in der Probenträgereinheit angeordnet ist, zu ermöglichen.

Die Probenträgervorrichtung weist eine für die gewünschte Funktionalität überschaubare Anzahl von Komponenten auf, sodass sie platzsparend in einem Messgerät zur thermischen Probenanalyse untergebracht werden kann.

Insofern kann die Probenträgervorrichtung etwa in einem sie umgebenden Messgerät zur thermischen Probenanalyse eingesetzt werden. Sie kann insofern platzsparend in einer Heiz- und Kühleinrichtung mit einem kleinen Innenraum eines Messgeräts zur thermischen Probenanalyse integriert werden.

Die erfinderische Probenträgervorrichtung für Messgeräte zur thermischen Probenanalyse ist zudem ausgelegt, mit Vorteil eingesetzt zu werden, wenn es darum geht, einen Wärmestrom aus der Temperaturdifferenz zwischen der Probe und der Referenzeinheit mit Hilfe einer Kalibrierung zu berechnen.

Im Zusammenhang mit der vorgestellten Erfindung ist der Begriff *"räumlich"* bezogen auf drei Dimensionen aufzufassen. Mit anderen Worten sind die Referenzeinheit und Probenträgereinheit ohne direkten Kontakt zueinander vorgesehen. Lediglich das angeordnete Wärmestromelement verbindet die beiden Komponenten derart, sodass hier ein Wärmstrom zwischen den Komponenten fließen kann.

Die zuvor genannten Vorteile gelten, soweit übertragbar, auch für das vorgestellte erfinderische Messgerät zur thermischen Probenanalyse.

Gemäß eines Ausführungsbeispiels der Probenträgervorrichtung ist vorgesehen, dass das definierte Wärmestromelement ausgewählt ist aus: Metalldraht, Kupferdraht, Platindraht, Platinlegierungsdraht, Nickelchromdraht, Nickellegierungsdraht, Metallblech, Kupferblech, Platinblech, Platinlegierungsblech, Nickelchromblech, Nickellegierungsblech, Metallstab, Kupferstab, Platinstab, Platinlegierungsstab, Nickelchromstab, Nickellegierungsstab.

Platzsparende Konzepte sind somit besonders leicht und mit Vorteil realisierbar. Die ausgewählten Materialien sind zudem hinlänglich bekannt, sodass gewünschte Kalibrierungsschritte einfach und unkompliziert durchführbar sind.

Gemäß einer Weiterbildung der Probenträgervorrichtung ist vorgesehen, dass die Hauptträgerstruktur ausgelegt ist, die Referenzeinheit unterhalb der Probenträgereinheit zu halten.

Ein sich ergebender Gesamtumfang kann somit eine definierte maximale Größe aufweisen, da die beiden Komponenten übereinander vorgesehen sind, sodass platzsparende Konzepte etwa durch eine gleiche Auswahl der jeweiligen Umfänge der Komponenten realisierbar sind.

Gemäß einer Weiterbildung der Probenträgervorrichtung ist vorgesehen, dass die Hauptträgerstruktur zumindest ein erstes Halteelement umfasst, welches ausgelegt ist, sowohl die Referenzeinheit als auch die Probenträgereinheit reversibel aufzunehmen. Da die Anzahl an nötigen Komponenten somit sich weiter reduzieren lässt, können platzsparende Konzepte besonders vorteilhaft realisiert werden.

Gemäß eines Ausführungsbeispiels der Probenträgervorrichtung ist vorgesehen, dass die Hauptträgerstruktur ein zweites Haltelement umfasst, welches ausgelegt ist, jeweilige Verbindungsleitungsabschnitte der ersten und zweiten Thermoelementeinrichtungen aufzunehmen und das erste Halteelement zu halten.

Ein modularer Aufbau in der vorgestellten Art und Weise hat den Vorteil, dass somit besonders bedienerfreundliche Konzepte realisierbar sind, um etwa Wartungsarbeiten oder Austauschvorgänge von gehaltenen Komponenten zu erleichtern.

Gemäß eines Ausführungsbeispiels der Probenträgervorrichtung ist vorgesehen, dass das zweite Halteelement einen ersten Endbereich umfasst, welcher ausgelegt ist, vom ersten Halteelement aufgenommen zu werden , und einen zweiten Endbereich, gegenüberliegend dem ersten Endbereich, umfasst, welcher ausgelegt ist, eine Steckkontakteinheit der Probenträgervorrichtung zur Verbindung der jeweiligen Verbindungsleitungsabschnitte der ersten und zweiten Thermoelementeinrichtungen mit einem Messgerät aufzunehmen.

Auf diese Weise kann die Probenträgervorrichtung bedienerfreundlich und auf einfache Art in ein Messgerät eingesteckt werden, sodass etwa eine Austauschbarkeit mit einer anderen Probenträgervorrichtung oder anstehende Wartungsarbeiten in Verbindung mit Austauschvorgängen von getragenen Komponenten oder Strukturen besonders einfach und mit Vorteil vorgenommen werden können.

Gemäß einer Weiterbildung der Probenträgervorrichtung ist vorgesehen, dass die Probenträgereinheit Haltemittel zum Halten von jeweiligen Probenbehältern umfasst, welche ausgelegt sind, flexibel einstellbar zu sein, sodass jeweilige Probenbehälter unterschiedlicher Größe und verschiedener Materialien jeweils einzeln von der Probenträgereinheit reversibel aufnehmbar sind.

Insofern ist die erfindungsgemäße Probenträgervorrichtung ausgelegt, zur Aufnahme von jeweiligen Proben unterschiedliche Behälter aufzunehmen. Die jeweiligen Behälter können dabei so beschaffen sein, wie sie in der thermischen Analyse üblicherweise verwendet werden. Insofern können die Behälter etwa unterschiedliche Tiegel sein, die sich in ihrer Größe beispielsweise hinsichtlich eines mittleren Durchmessers unterscheiden.

Auch können allgemein verschiedene Tiegel mit unterschiedlichen Formen aufgenommen werden, da die Haltemittel für diese Zwecke flexibel genug ausgebildet sein können. Auch können die Behälter aus unterschiedlichen Materialien sein, da die Haltemittel für diese Zwecke flexibel genug ausgebildet sein können. Üblicherweise wird der Behälter vor der Messung auf die Probenträgervorrichtung aufgesetzt und nach der Messung wieder abgenommen.

Gemäß eines Ausführungsbeispiels der Probenträgervorrichtung ist vorgesehen, dass das erste Haltemittel aus Aluminiumoxid (Aₗ₂O₃) hergestellt ist.

Da es sich hierbei um ein schlecht wärmeleitendes Material handelt, kann der vorgesehene Wärmestrompfad mittels des definierten Wärmestromelements problemlos auf die vorgesehene Weise eingesetzt werden. Da es sich zudem um ein sehr hitzebeständiges Material handelt, kann solch ein Haltemittel besonders gut in Bereichen eines Messgerätes eingesetzt werden, welches zur Aufheizung der jeweiligen Proben vorgesehen ist.

Gemäß eines Ausführungsbeispiels der Probenträgervorrichtung ist vorgesehen, dass die Referenzeinheit und die Probenträgereinheit ohne direkten Kontakt übereinander angeordnet sind und jeweils minimal einen Durchmesser aufweisen, welcher im Wesentlichen minimal einem zweifachen Durchmesser des zweiten Halteelements entspricht.

Platzsparende Konzepte sind somit mit Vorteil realisierbar. Somit sind verschiedene Durchmesser vorstellbar, wobei jede Komponente auch einen spezifischen aufweisen kann. Jedoch darf die minimale Grenze des zweifachen Durchmessers dabei jeweils nicht unterschritten werden. Dies hat den Vorteil, dass somit eine optimale Anordnung in spezifischen Messgeräten jederzeit gewährleistbar sein kann.

Gemäß eines Ausführungsbeispiels der Probenträgervorrichtung ist vorgesehen, dass die Probenträgereinheit mittels zumindest einer ersten Steckverbindung an dem ersten Halteelement reversibel befestigbar ist.

Austauschvorgänge von Probenträgereinheiten können somit komfortabel und innerhalb eines bedienerfreundlichen Zeitintervalls vorgenommen werden.

Gemäß eines Ausführungsbeispiels der Probenträgervorrichtung ist vorgesehen, dass die Referenzeinheit mittels zumindest einer zweiten Steckverbindung an dem ersten Halteelement reversibel befestigbar ist.

Austauschvorgänge von Referenzeinheiten können somit komfortabel und innerhalb eines bedienerfreundlichen Zeitintervalls vorgenommen werden.

Gemäß eines Ausführungsbeispiels der Probenträgervorrichtung ist vorgesehen, dass das erste Haltelement mittels zumindest einer Steckverbindung an dem zweiten Halteelement reversibel befestigbar ist.

Auf diese Weise kann ein noch besserer modularer Aufbau begünstigt werden, sodass beispielsweise für Wartungsarbeiten oder Austauschvorgänge von Komponenten der Probenträgervorrichtung flexible und bedienungsfreundliche Konzepte bereitstellbar sind.

Gemäß eines Ausführungsbeispiels der Probenträgervorrichtung ist vorgesehen, dass die zumindest eine Steckverbindung zwischen erstem und zweiten Halteelement im Wesentlichen eine konische Form aufweist.

Diese Form einer Steckverbindung bietet den Vorteil, zum einen eine bedienerfreundliche Reversibilität bereitzustellen und zum anderen eine zuverlässige Festigkeit auch bei hohen Temperaturschwankungen zu gewährleisten, sodass eine besonders zuverlässige und stabile Probenträgervorrichtung resultiert.

Gemäß eines Ausführungsbeispiels der Probenträgervorrichtung ist vorgesehen, dass die Probenträgereinheit im Wesentlichen aus einer Metallfolie beschaffen ist, wobei das Metall ausgewählt ist aus: Platin, Platinlegierung, Nickelchrom, Nickellegierung, Stahl und ähnlichen Legierungen, und wobei eine Dicke der Metallfolie zwischen 0,02 bis 3 mm, vorzugsweise zwischen 0,03 und 2 mm, vorzugsweise zwischen 0,05 bis 1 mm vorgesehen ist.

Platzsparende Konzepte der Probenträgervorrichtung sind somit noch vorteilhafter bereitstellbar, da die Probenträgereinheit somit nur ein sehr geringes Raumvolumen benötigt, um funktional für die vorgesehene Zwecke vorhanden zu sein.

Gemäß eines Ausführungsbeispiels der Probenträgervorrichtung ist vorgesehen, dass jeweilige Steckverbindungen mit zumindest einem Keramikkleber verstärkt sind.

Auf diese Weise kann die Probenträgervorrichtung für Anwendungen eingesetzt werden, die eine besonders hohe Stabilität erfordern. Ein jeweils eingesetzter Keramikkleber kann beispielsweise so ausgewählt und beschaffen sein, sodass Temperaturresistenzen bis zu 1.700 °C erreichbar sind. Eine Reversibilität kann dabei zwar eingeschränkt sein, wobei jedoch mit einem gewissen Krafteinsatz dennoch, wenn nötig, Lösevorgänge bewirkbar sind. Anschließend kann neu verklebt werden.

Gemäß eines Ausführungsbeispiels des Messgeräts ist vorgesehen, dass das Messgerät ohne eine Gewichtsmesseinrichtung zur Erfassung einer Probenmasse der zu untersuchenden Probe vorgesehen ist.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: eine schematische Seitenansicht einer Probenträgervorrichtung für Messgeräte zur thermischen Probenanalyse;
- Fig. 2: eine weitere schematische Seitenansicht einer alternativen Probenträgervorrichtung für Messgeräte zur thermischen Probenanalyse;
- Fig. 3: eine weitere schematische Seitenansicht einer Probenträgervorrichtung für Messgeräte zur thermischen Probenanalyse;
- Fig. 4: eine schematische Draufsicht auf eine Probenträgervorrichtung für Messgeräte zur thermischen Probenanalyse ohne Probenträgereinheit;
- Fig. 5: eine schematische Darstellung eines Messgeräts zur thermischen Probenanalyse.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

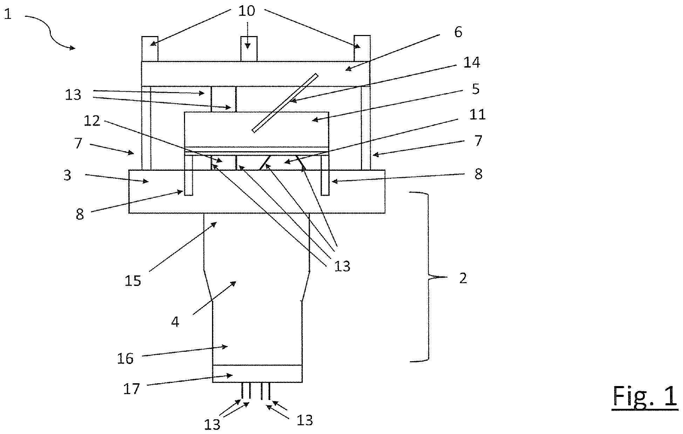

Fig. 1 zeigt eine schematische Seitenansicht einer Probenträgervorrichtung 1 für Messgeräte zur thermischen Probenanalyse.

Die Probenträgervorrichtung 1 ist dabei mit einer Hauptträgerstruktur 2 dargestellt. Die Hauptträgerstruktur 2 umfasst ein erstes und ein zweites Halteelement 3, 4. In der in Fig. 1 dargestellten Ausführungsform hält das zweite Halteelement 4 das erste Haltelement mittels nicht näher dargestellter Haltemittel.

Es kann sich beispielsweise um eine gesteckte Verbindung oder etwa eine Schraubverbindung handeln, mittels welcher die beiden Haltemittel 3, 4 miteinander reversibel verbunden sind. In einer nicht näher dargestellten Ausführungsvariante ist vorstellbar, dass die beiden Halteelemente 3, 4 im Wesentlichen einstückig als Einheit vorgesehen sind.

Das erste Halteelement 3 weist in der gezeigten schematischen Seitenansicht eine im Wesentlichen rechteckige Form auf, wobei es, bezogen auf die Bildebene, oberhalb des zweiten Haltelements 4 vorgesehen ist und das zweite Halteelement 4 an seitlichen Bereichen räumlich jeweils überragt. Die Hauptträgerstruktur 2 ist in der gezeigten Ausführungsvariante im Wesentlichen rotationssymmetrisch vorgesehen. Das erste Halteelement 3 weist einen nach unten (bezogen auf die Bildebene) gerichteten Teil auf, der geeignet ist, mit dem zweiten Halteelement 4 eine mechanische Verbindung einzugehen. Dieser Teil weist dabei größere äußere Abmessungen auf, als das Halteelement 4. Dadurch ist es zum Beispiel möglich, dass dieser nach unten gerichtete Teil vom Halteelement 3 das Haltelement 4 durch Einstecken aufnimmt.

Das Halteelement 4 ist dabei stabförmig und im Wesentlichen in einer zylindrischen Form abgebildet. Alternative Formen sind in nicht näher dargestellten Ausführungsvarianten vorstellbar. So ist vorstellbar, dass sich nach unten hin eine im Wesentlichen gleiche Formgebung ergibt und anstatt einer zylindrischen Form eine rechteckige Form oder dergleichen vorgesehen ist.

Das erste Halteelement 3 ist ausgelegt, sowohl eine dargestellte Referenzeinheit 5 als auch eine dargestellte Probenträgereinheit 6 der Probenträgervorrichtung 1 reversibel aufzunehmen.

Die Referenzeinheit 5 weist in der gezeigten schematischen Seitenansicht eine im Wesentlichen rechteckige Form auf, wobei sie, bezogen auf die Bildebene, unterhalb der Probenträgereinheit 6 vorgesehen ist.

Die Probenträgereinheit 6 weist in der gezeigten schematischen Seitenansicht ebenfalls eine im Wesentlichen rechteckige Form auf, wobei sie, bezogen auf die Bildebene, oberhalb der Referenzeinheit 5 vorgesehen ist.

Die Probenträgereinheit 6 ist mittels zwei ersten Steckverbindungen 7 an dem ersten Halteelement 3 reversibel befestigbar ist. Hierfür kann das erste Halteelement 3 jeweilige Schlitze aufweisen, in welche die zwei ersten Steckverbindungen 7 im Wesentlichen passgenau einsteckbar sind.

Die Anzahl der ersten Steckverbindungen 7 kann in nicht näher dargestellten Ausführungsvarianten variieren, wobei dann die Anzahl der Schlitze in dem ersten Halteelement 3 entsprechend anzupassen ist. Es können beispielsweise auch drei oder vier erste Steckverbindungen 7 vorgesehen sein, welche sich dabei im Wesentlichen gleich beabstandet in einem äußeren Bereich der Probenträgereinheit 6 befinden und dabei gleichermaßen im Wesentlichen rechtwinklig nach unten (bezogen auf die Bildebene) abstehen.

Diese zwei ersten Steckverbindungen 7 sind dabei an gegenüberliegenden seitlichen Bereichen der Probenträgereinheit 6 vorgesehen und ragen im Wesentlichen rechtwinklig von dieser nach unten, wobei sie im unteren Bereich in dem ersten Halteelement 3 eingesteckt vorgesehen sind.

Diese zwei ersten Steckverbindungen 7 können, wie dargestellt, als separate Bauteile vorgesehen sein, welche fest mit der Probenträgereinheit 6 verbunden sind. Alternativ ist vorstellbar, dass die Probenträgereinheit 6 und die zwei ersten Steckverbindungen 7 einstückig vorgesehen sind und somit eine bauliche Einheit darstellen. In beiden Varianten können die Probenträgereinheit 6 und die zwei ersten Steckverbindungen 7 aus dem gleichen Material beschaffen sein und dabei im Wesentlichen eine gleiche Beschaffenheit hinsichtlich ihrer Dicke aufweisen. Es ist beispielsweise vorstellbar, dass sie aus einer Metallfolie oder einer biegsamen Metallplatte hergestellt sind.

In einer nicht näher dargestellten Ausführungsvariante ist vorstellbar, dass die zwei ersten Steckverbindungen 7 durch das erste Halteelement 3 jeweils durchgesteckt vorgesehen sind, sodass sie bezogen auf die Bildebene unten aus dem ersten Halteelement 3 hervorragen, wobei der überstehende Anteil der jeweiligen ersten Steckverbindungen 7, welcher auch als Laschen bezeichnet werden können, anschließend beispielsweise um 90° oder mehr, beispielsweise 95°, 100° oder 120 bis 150° oder dergleichen, verdreht beziehungsweise verdrillt wird.

Zusätzlich kann an dieser jeweiligen verdrehten beziehungsweise verdrillten Stelle eine kleine Menge Keramikklebstoff oder dergleichen angebracht werden, um eine zusätzliche Stabilität zu bewirken. Die Menge kann beispielsweise so gewählt sein, sodass eine ausreichende Stabilität bereitstellbar ist und dennoch die Möglichkeit gegeben ist, eine unter Krafteinwirkung erreichbare Trennung der mit dem ersten Haltelement 3 verbundenen Probenträgereinheit 6 zu bewirken.

Die Referenzeinheit ist mittels zweier zweiten Steckverbindungen 8 an dem ersten Halteelement 3 reversibel befestigt dargestellt. Diese zweiten Steckverbindungen 8 ragen dabei im Wesentlichen rechtwinklig nach unten und sind jeweils an einer Außenseite des ersten Halteelements 3 vorgesehen.

An diesem äußeren Bereich des ersten Halteelements 3 ragen sie über eine längsseitige Mitte des ersten Halteelements 3 hinaus. Auf der gegenüberliegenden, in dieser Seitenansicht verdeckten Seite befinden sich jeweils Anteile dieser zweiten Steckverbindungen 8, wobei sie zusammen mit den dargestellten Teilen der zweiten Steckverbindungen 8 eine klammerartige Struktur ergeben, sodass die zweiten Steckverbindungen 8 auf dem ersten Halteelement 3 aufgesteckt sind.

In einer nicht näher dargestellten Ausführungsvariante ist vorstellbar, dass die zweiten Steckverbindungen 8 jeweils auf dem ersten Halteelement 3 wie gezeigt aufgesteckt sind, wobei jeweilige Endbereiche der jeweiligen Anteile nach unten (bezogen auf die Bildebene) über das erste Halteelement 3 hinausragen.

Die dargestellten zweiten Steckverbindungen 8 sind zudem miteinander verbunden dargestellt, wobei ein Verbindungsbereich 9 eine gleiche Seitenlänge wie die Referenzeinheit 5 aufweist und unterhalb dieser vorgesehen ist.

In einer nicht näher dargestellten Ausführungsvariante ist vorstellbar, dass dieser Verbindungsbereich 9, an welchem jeweils die zweiten Steckverbindungen 8 angeordnet sind, zusammen mit der Referenzeinheit 5 und den zweiten Steckverbindungen 8 einstückig vorgesehen ist. Auch ist vorstellbar, dass es sich lediglich um miteinander verbundene Strukturen handelt, wobei zumindest die Referenzeinheit 5 aus einem anderen Material vorgesehen ist. Insofern ist vorstellbar, dass der Verbindungsbereich 9 und die zweiten Steckverbindungen 8 zusammen eine stoffliche Einheit aus einem Material darstellen und die Referenzeinheit 5 entsprechend aus einem anderen Material, welches sich zumindest hinsichtlich seiner wärmeleitenden Eigenschaften von dem Material der stofflichen Einheit unterscheidet, vorgesehen ist.

Die Referenzeinheit 5 und die Probenträgereinheit 6 sind räumlich getrennt voneinander dargestellt, wobei die Hauptträgerstruktur 2 eben für diesen Zweck ausgebildet vorgesehen ist.

Die Probenträgereinheit 6 weist, bezogen auf die Bildebene, oberhalb insgesamt drei Haltemittel 10 auf, welche mit einem Hauptkörper der Probenträgereinheit 6 verbunden sind. Diese Verbindung kann auch stofflich sein. Mit anderen Worten können die jeweiligen Haltemittel 10 auch ein jeweils fester Bestandteil der Probenträgereinheit 6 sein. Die Haltemittel 10 ragen jeweils (bezogen auf die Bildebene) im Wesentlichen rechtwinklig nach oben und sind zum Halten von jeweiligen nicht näher dargestellten Probenbehältern vorgesehen. Dabei sind die Haltemittel 10 ausgelegt, flexibel einstellbar zu sein, sodass jeweilige nicht näher dargestellte Probenbehälter unterschiedlicher Größe und verschiedener Materialien jeweils einzeln von der Probenträgereinheit 6 reversibel aufnehmbar sind. Beispielsweise können somit Probenbehälter, welche eine zu bemessende Probe enthalten, mit unterschiedlichen Größen, insbesondere hinsichtlich ihres jeweiligen mittleren Durchmessers, von der Probenträgereinheit 6 aufgenommen werden, wobei die Haltemittel 10 dann für eine gewisse Stabilität während dieser Aufnahme sorgen. Beispielsweise können die Haltemittel 10 biegsam vorgesehen sein, sodass sie in Richtung jeweiliger Wandungen des aufgenommenen Probebehälters verbiegbar sind, um entsprechende Haltekräfte zu bewirken, mittels welcher der aufgenommene Probebehälter in etwa mittig der Probenträgereinheit 6 gehalten wird.

Die Probenträgervorrichtung 1 für Messgeräte zur thermischen Probenanalyse ist zudem mit der Referenzeinheit 5 mit einer ersten Thermoelementeinrichtung 11 und der Probenträgereinheit 6 mit einer zweiten Thermoelementeinrichtung 12 dargestellt. Von der ersten und zweiten Thermoelementeinrichtung 11, 12 sind jeweils nur jeweilige Thermodrähte 13 in Fig. 1 zu erkennen. Jeweils zugehörige Thermoelemente sind von der Probenträgereinheit 6 beziehungsweise von der Referenzeinheit 5 in dieser Seitenansicht verdeckt.

Mittels der jeweiligen Thermoelementeinrichtungen 11, 12 können Temperaturen an der Probenträgereinheit 6 und an der Referenzeinheit 5 gemessen werden, wenn die erfinderische Probenträgervorrichtung 1 entsprechend an einem Messgeräte zur thermischen Probenanalyse funktional angeschlossen ist. Durch eine entsprechende Auswerteelektronik kann auch die Temperaturdifferenz zwischen den beiden Thermoelementeinrichtungen 11, 12 erfasst werden.

Zwischen der Referenzeinheit 5 und der Probenträgereinheit 6 ist zudem ein definiertes Wärmestromelement 14 angeordnet dargestellt. Dabei ist dieses Wärmestromelement 14 insbesondere in dieser in Fig. 1 dargestellten Seitenansicht an jeweiligen Hauptkörpern von der Referenzeinheit 5 und der Probenträgereinheit 6 angeordnet vorgesehen. Insbesondere ist dabei das Wärmestromelement 14 jeweils fest mit der Referenzeinheit 5 und der Probenträgereinheit 6 verbunden vorgesehen.

Mit anderen Worten ist jeweils eine Verbindung vorgesehen, welche geeignet ist, einen Wärmestrom zwischen den Komponenten zu ermöglichen. Es ist beispielsweise vorstellbar, dass es sich bei den jeweiligen Verbindungen um solche handelt, welche im Wesentlichen einer stofflichen Verbindung zwischen den jeweiligen Komponenten gleichgestellt sein kann.

Die Hauptträgerstruktur 2 umfasst dabei das zweite Haltelement 4, welches ausgelegt ist, jeweilige Verbindungsleitungsabschnitte, sprich die Thermodrähte 13, der ersten und zweiten Thermoelementeinrichtungen 11, 12 aufzunehmen und gleichzeitig das erste Halteelement 3 zu halten. Die Hauptträgerstruktur 2 ist zudem ausgelegt und so dargestellt, die Referenzeinheit 5 unterhalb der Probenträgereinheit 6 zu halten, wobei jeweilige Verbindungsleitungsabschnitte, sprich die Thermodrähte 13, im Wesentlichen mittig der Probenträgervorrichtung 1 geführt dargestellt sind.

Das zweite Halteelement 4 weist einen ersten Endbereich 15 auf, welcher vom ersten Halteelement 3 aufgenommen wird, und zudem einen zweiten Endbereich 16, gegenüberliegend dem ersten Endbereich 15, welcher ausgelegt ist, eine Steckkontakteinheit 17 der Probenträgervorrichtung 1 zur Verbindung der jeweiligen Verbindungsleitungsabschnitte, sprich der Thermodrähte 13, der ersten und zweiten Thermoelementeinrichtungen 11, 13 mit einem nicht näher dargestelltem Messgerät aufzunehmen. Diese Thermodrähte 13 ragen in der Darstellung von Fig. 1 nach unten (bezogen auf die Bildebene) hervor. Es handelt sich um die gleichen Thermodrähte 13 die jeweils zwischen der Probenträgereinheit 6 und dem ersten Halteelement 3 ausschnittsweise dargestellt sind.

Es ist jedoch ebenso vorstellbar, dass diese Enden in der Steckkontakteinheit 17 angeordnet vorgesehen sind und dann mittels eines Steckkontaktprinzips oder dergleichen mit Anschlussbereichen von einem nicht näher dargestelltem Messgerät verbindbar sind.

In einer weiteren, nicht näher dargestellten Ausführungsvariante ist vorstellbar, dass das erste und zweite Halteelement 3, 4 eine zusammengehörige stoffliche Einheit bilden, sprich als ein Bauteil, welches die jeweiligen Funktionen des ersten und zweiten Halteelements 3, 4 aufweist.

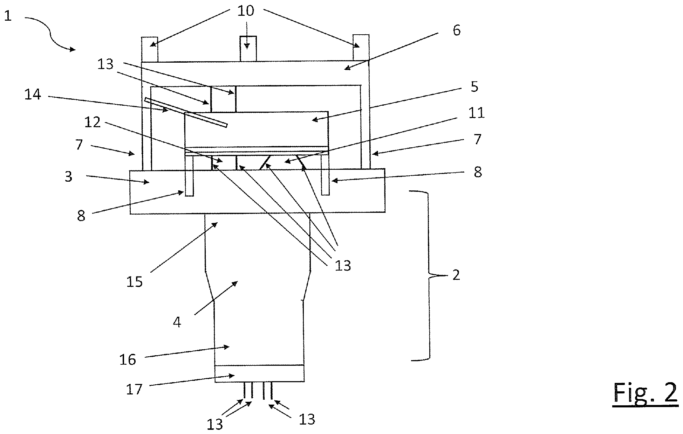

Fig. 2 zeigt eine weitere schematische Seitenansicht einer alternativen Probenträgervorrichtung 1 für Messgeräte zur thermischen Probenanalyse.

Es handelt sich dabei im Wesentlichen um die gleiche Probenträgervorrichtung 1 für Messgeräte zur thermischen Probenanalyse, wie sie in Fig. 1 dargestellt und beschrieben ist. Gleiche Bezugszeichen werden hier verwendet, sodass diese an dieser Stelle nicht neu eingeführt werden.

Ein wesentlicher Unterschied zwischen Fig. 2 und Fig. 1 ist die Verortung des definierten Wärmestromelements 14. Dieses definierte Wärmestromelement 14 ist in Fig. 2 ebenfalls zwischen der Referenzeinheit 5 und der Probenträgereinheit 6 vorgesehen, wobei jedoch eine Verbindungsstelle an der Probenträgereinheit 6 über die erste Steckverbindung 7 vorgesehen ist. Die Probenträgereinheit 6 und die jeweiligen ersten Steckverbindungen 7 sind in Fig. 2 als stoffliche Einheit vorgesehen. Mit anderen Worten handelt es sich um eine einstückige Baukomponente, welche somit in sich wärmeleitend ausgebildet ist. Die Probenträgereinheit 6 mit den zugehörigen jeweiligen ersten Steckverbindungen 7 kann beispielsweise als Metallfolie oder Metallblech ausgebildet sein, wobei die jeweiligen ersten Steckverbindungen 7 bezogen auf die Bildebene nach unten weggebogen sind. Eine Verbindungsstelle des definierten Wärmestromelements 14 liegt somit an der Probenträgereinheit 6, wobei in Fig. 2 entsprechend ein wärmeleitender Pfad über eine der Steckverbindungen 7 vorgesehen ist.

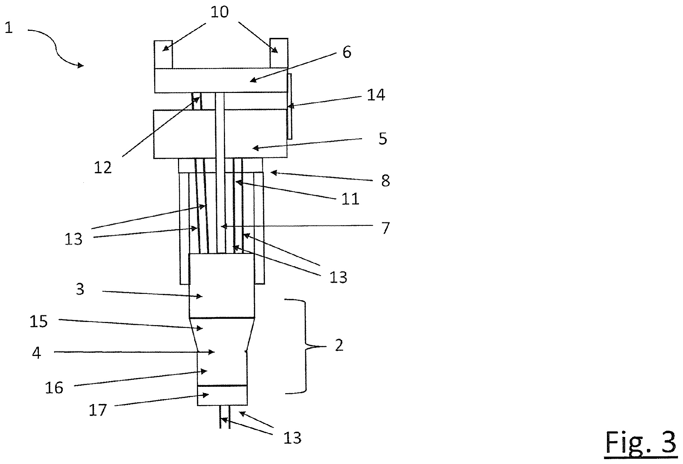

Fig. 3 zeigt eine weitere schematische Seitenansicht einer Probenträgervorrichtung 1 für Messgeräte zur thermischen Probenanalyse.

Es handelt sich dabei im Wesentlichen um die gleiche Probenträgervorrichtung 1 für Messgeräte zur thermischen Probenanalyse, wie sie in Fig. 1 dargestellt und beschrieben ist. Gleiche Bezugszeichen werden hier verwendet, sodass diese an dieser Stelle nicht neu eingeführt werden.

In der Fig. 3 ist eine in Bezug auf die Darstellung von Fig. 1 um 90° verdrehte Seitenansicht dargestellt. Die jeweiligen zweiten Steckverbindungen 8 sind dabei auf dem ersten Halteelement 3 aufgesteckt dargestellt, wobei jeweilige Endbereiche der jeweiligen Anteile nach unten (bezogen auf die Bildebene) über das erste Halteelement 3 hinausragen. Insofern sind die jeweiligen zweiten Steckverbindungen 8 nicht nur auf dem ersten Halteelement 3 aufgesteckt, sondern vielmehr auf diesem aufgeklemmt vorgesehen, sodass ein sicherer Halt der Referenzeinheit 5 auf dem Halteelement 3 resultiert.

Die unten über die Steckkontakteinheit 17 hinausragenden jeweiligen Verbindungsleitungsabschnitte, sprich die Thermodrähte 13, der ersten und zweiten Thermoelementeinrichtungen 11, 12 verdecken jeweils einen Thermodraht 13, sodass in dieser Seitenansicht von Fig. 3 nur zwei Thermodrähte 13 an dieser Stelle dargestellt sind.

Oberhalb des ersten Halteelements 3 sind vier Thermodrähte 13 dargestellt, wobei jeweils zwei Thermodrähte 13 für die jeweilige Thermoelementeinrichtung 11, 12 vorgesehen sind. Insofern werden die Thermodrähte 13 der jeweiligen Thermoelementeinrichtungen 11, 12 innerhalb der Hauptträgerstruktur 2 von unten nach oben geführt und teilen sich entsprechend ihrer Funktion oberhalb des ersten Halteelements 3 auf.

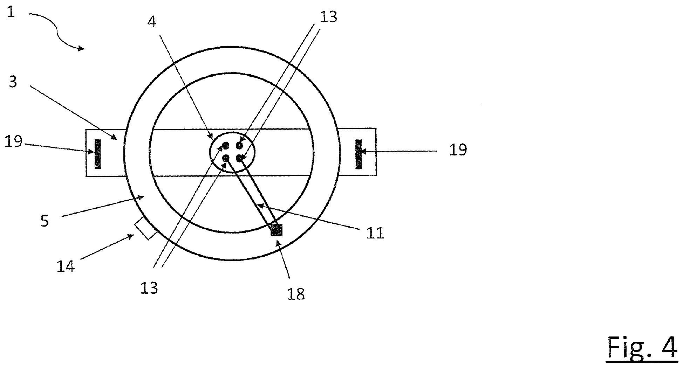

Fig. 4 zeigt eine schematische Draufsicht auf eine Probenträgervorrichtung 1 für Messgeräte zur thermischen Probenanalyse ohne Probenträgereinheit.

Es kann sich dabei im Wesentlichen um die gleiche Probenträgervorrichtung 1 für Messgeräte zur thermischen Probenanalyse, wie sie in Fig. 1 dargestellt und beschrieben ist, handeln. Insofern werden gleiche Bezugszeichen hier verwendet, sodass diese an dieser Stelle nicht neu eingeführt werden.

Die Referenzeinheit 5 ist dabei als im Wesentlichen rundes Element dargestellt, welches einen Freiraum in ihrer Mitte aufweist. Das erste Halteelement 3 ist im Wesentlichen mit einer rechteckigen Form dargestellt, wobei in der Mitte des ersten Halteelements 3 der Blick in das zweite Halteelement 4 freigegeben ist. Insofern ist das zweite Halteelement 4 innen hohl vorgesehen, sodass in diesem Hohlraum die Thermodrähte 13 der jeweiligen Thermoelementeinrichtungen 11, 12 führbar sind.

In Fig. 4 ist die Thermoelementeinrichtung 11, welche eine Temperatur an der Referenzeinheit 5 misst, dargestellt, wobei ein Thermoelement 18 sinngemäß im direkten Kontakt mit einem Oberflächenabschnitt der Referenzeinheit 5 verbunden ist. Das Thermoelement 18 wird dabei von jeweiligen Thermodrähten 13 der Thermoelementeinrichtung 11 eingefasst. Diese Thermodrähte 13 sind dabei im direkten Kontakt mit dem Thermoelement 18 vorgesehen. Das Thermoelement 18 kann eine räumliche Ausdehnung in alle Richtungen von wenigen Millimetern, beispielsweise in einem Bereich von 1 bis 35 mm, vorzugsweise von 5 bis 20 mm, vorzugsweise von 2 bis 15 mm, vorzugsweise von 3 bis 7 mm aufweisen.

Das Thermoelement 18 kann beispielsweise in einer Ausführungsform eine Abmessung aufweisen, welche über die Abmessung einer einfachen Thermoelementperle hinausgeht und damit geeignet ist und ausgelegt ist, ein Temperaturprofil in einem Bereich zwischen einer zu bemessenden Probe und der Referenzeinheit 5 bis zu einem gewissen Grad zu ermitteln.

Insofern besteht im Anwendungsfall der erfinderischen Probenträgervorrichtung 1 ein definierter Wärmestrompfad zwischen einer zu bemessenden Probe, welche auf der Probenträgereinheit 5 gehalten wird, beispielsweise, indem sie in einem Tiegel oder dergleichen vorgehalten wird, und der Referenzeinheit 5. Insofern ist die Probenträgereinheit 6 der Probenträgervorrichtung 1 mit der Referenzeinheit 5 direkt und mit einem definiertem thermischen Widerstand über ein Material im festen Aggregatzustand miteinander verbunden.

Die Probenträgervorrichtung 1 für Messgeräte zur thermischen Probenanalyse ist in dieser Darstellung ohne Probenträgereinheit 6 dargestellt, sodass der Blick auf das erste und zweite Halteelement 3, 4 freigegeben ist. Sinngemäß würde sich die Probenträgereinheit 6 ohne direkten Kontakt über der dargestellten Referenzeinheit 5 anschließen, wobei eine Verbindung mittels des dargestellten definierten Wärmestromelements 14 vorgesehen ist.

In dem ersten Haltelement 3 sind an jeweiligen seitlichen Endbereichen zudem jeweilige Steckschlitzbereiche 19 dargestellt, in welche die nicht dargestellte Probenträgereinheit 6 einsteckbar ist. In dieser dargestellten Ausführungsform weisen diese Steckschlitzbereiche 19 eine im Wesentlichen rechteckige Form auf.

In anderen nicht näher dargestellten Ausführungsformen ist jedoch vorstellbar, dass sie alternative Formen aufweisen, wobei sie im Wesentlichen entsprechend einer Form von den ersten Steckverbindungen 7 der nicht dargestellten Probenträgereinheit 6 auszuwählen sind, sodass die Steckverbindungen 7 entsprechend möglichst passgenau an dieser Stelle an dem ersten Halteelement 3 befestigbar sind.

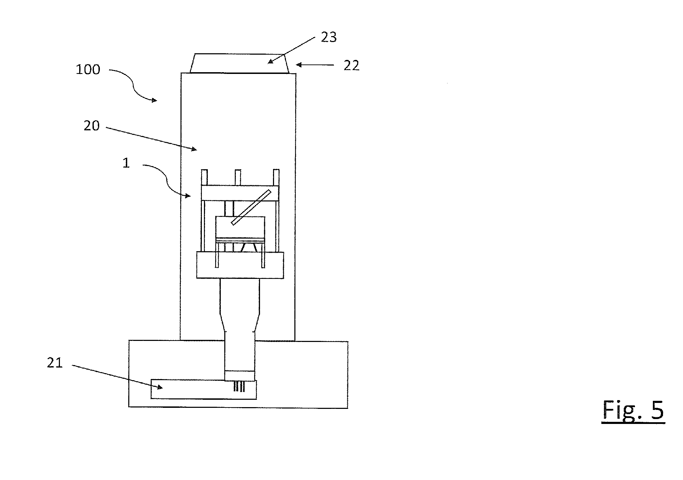

Fig. 5 zeigt eine schematische Darstellung eines Messgeräts 100 zur thermischen Probenanalyse. Dabei ist eine erfinderische Probenträgervorrichtung 1 für Messgeräte zur thermischen Probenanalyse in einer Heiz- und Kühleinrichtung 20 des Messgeräts 100 angeordnet dargestellt.

Es kann sich dabei im Wesentlichen um die gleiche Probenträgervorrichtung 1 für Messgeräte zur thermischen Probenanalyse, wie sie in Fig. 1 dargestellt und beschrieben ist, handeln.

Die Probenträgervorrichtung 1 ist dabei im Wesentlichen mittig in der Heiz- und Kühleinrichtung 20 des Messgeräts 100 vorgesehen, wobei die Probenträgervorrichtung 1 über die Steckkontakteinheit 17 mit einer Verbindungseinheit 21 des Messgeräts 100 funktional gekoppelt dargestellt ist.

Insbesondere sind dabei jeweilige Thermodrähte 13 von jeweiligen Thermoelementeinrichtungen 11, 12 der Probenträgervorrichtung 1 mit dem Messgerät 100 gekoppelt vorgesehen, sodass über eine nicht näher dargestelltes Steuergerät des Messgeräts 100 entsprechend Steuerungs- und Messvorgänge bewirkbar sind.

Es ist insbesondere möglich, dass im Messgerät 100 eine nicht näher dargestellte Gewichtsmesseinrichtung, beispielsweise in Form einer Waage, enthalten ist, mit welcher die Probenträgervorrichtung 1 über die Steckkontakteinheit 17 verbunden ist.

Dies ermöglicht dann die Messung der Probenmasse, auch als Funktion von Temperatur und Zeit, simultan zur Erfassung der Temperaturen über die Thermoelementeinrichtungen 11 und 12 sowie deren Temperaturdifferenz. Aus der Temperaturdifferenz lässt sich mittels einer geeigneten Kalibrierung der Wärmestrom berechnen.

Aufgrund ihrer platzsparenden Struktur und Beschaffenheit ist die Probenträgervorrichtung 1 besonders vorteilhaft in dem Messgerät 100 anordenbar und kann beispielsweise leicht gewartet oder sogar ausgetauscht werden. Auch eine zu bemessende Probe in einem entsprechenden Probenbehälter ist leicht auf die Probenträgervorrichtung 1 einlegbar beziehungsweise anordenbar.

Es ist vorstellbar, dass das Messgerät 100 hierfür über einen nicht näher dargestellten Hebemechanismus verfügt, sodass die Probenträgervorrichtung 1 bezogen auf die Bildebene nach oben verfahrbar lagerbar beziehungsweise funktional koppelbar ist. Anschließend kann dann über einen Öffnungsbereich 22 mit Deckelelement 23 des Messgeräts 100 ein Benutzer beispielsweise einen Austauschvorgang oder dergleichen durchführen. Zum Beispiel können auf diese Weise auch Komponenten der Probenträgervorrichtung 1 zwecks Wartungsvorgänge oder Austauschvorgänge leicht erreichbar sein, da die Probenträgervorrichtung 1 ein entsprechend schlankes Design und die Anordnung der einzelnen Komponenten für diese Zwecke besonders vorteilhaft gelagert sind.

So können beispielsweise verschiedene Thermoelementeinrichtungen 11, 12 im Sinne eines Baukastenprinzips vorgesehen sein, wobei dann einzelne Komponenten somit leicht austauschbar vorgesehen sind, ohne dass hierfür das Messgerät 100 aufwendig in seine Einzelteile zerlegt werden müsste.

### BEZUGSZEICHENLISTE

- 1: Probenträgervorrichtung
- 2: Hauptträgerstruktur
- 3: erste Halteelement
- 4: zweite Halteelement
- 5: Referenzeinheit
- 6: Probenträgereinheit
- 7: erste Steckverbindung
- 8: zweite Steckverbindung
- 9: Verbindungsbereich
- 10: Haltemittel
- 11: erste Thermoelementeinrichtung
- 12: zweite Thermoelementeinrichtung
- 13: Thermodraht
- 14: definiertes Wärmestromelement
- 15: erster Endbereich
- 16: zweiter Endbereich
- 17: Steckkontakteinheit
- 18: Thermoelement
- 19: Steckschlitzbereich
- 20: Heiz- und Kühleinrichtung
- 21: Verbindungseinheit
- 22: Öffnungsbereich
- 23: Deckelelement

## Patentansprüche

1. Probenträgervorrichtung (1) für Messgeräte zur thermischen Probenanalyse umfassend eine Hauptträgerstruktur (2), eine Referenzeinheit (5) mit einer ersten Thermoelementeinrichtung (11) und eine Probenträgereinheit (6) mit einer zweiten Thermoelementeinrichtung (12), wobei die Hauptträgerstruktur (2) ausgelegt ist, sowohl die Referenzeinheit (5) als auch die Probenträgereinheit (6) räumlich getrennt voneinander zu halten, **dadurch gekennzeichnet, dass** zwischen Referenzeinheit (5) und Probenträgereinheit (6) ein definiertes Wärmestromelement (14) angeordnet ist.

2. Probenträgervorrichtung (1) nach Anspruch 1, wobei das definierte Wärmestromelement (14) ausgewählt ist aus: Metalldraht, Kupferdraht, Platindraht, Platinlegierungsdraht, Nickelchromdraht, Nickellegierungsdraht, Metallblech, Kupferblech, Platinblech, Platinlegierungsblech, Nickelchromblech, Nickellegierungsblech, Metallstab, Kupferstab, Platinstab, Platinlegierungsstab, Nickelchromstab, Nickellegierungsstab.

3. Probenträgervorrichtung (1) nach Anspruch 2, wobei die Hauptträgerstruktur (2) ausgelegt ist, die Referenzeinheit (5) unterhalb der Probenträgereinheit (6) zu halten.

4. Probenträgervorrichtung (1) nach einem der vorhergehenden Ansprüche, wobei die Hauptträgerstruktur (2) zumindest ein erstes Halteelement (3) umfasst, welches ausgelegt ist, sowohl die Referenzeinheit (5) als auch die Probenträgereinheit (6) reversibel aufzunehmen.

5. Probenträgervorrichtung (1) nach einem der vorhergehenden Ansprüche, wobei die Hauptträgerstruktur (2) ein zweites Haltelement (4) umfasst, welches ausgelegt ist, jeweilige Verbindungsleitungsabschnitte der ersten und zweiten Thermoelementeinrichtungen (11, 12) aufzunehmen und das erste Halteelement (3) zu halten.

6. Probenträgervorrichtung (1) nach Anspruch 5, wobei das zweite Halteelement (4) einen ersten Endbereich (15) umfasst, welcher ausgelegt ist, vom ersten Halteelement (3) aufgenommen zu werden, und einen zweiten Endbereich (16), gegenüberliegend dem ersten Endbereich (15), umfasst, welcher ausgelegt ist, eine Steckkontakteinheit (17) der Probenträgervorrichtung (1) zur Verbindung der jeweiligen Verbindungsleitungsabschnitte der ersten und zweiten Thermoelementeinrichtungen (11, 12) mit einem Messgerät aufzunehmen.

7. Probenträgervorrichtung (1) nach einem der vorhergehenden Ansprüche, wobei die Probenträgereinheit (6) Haltemittel zum Halten von jeweiligen Probenbehältern umfasst, welche ausgelegt sind, flexibel einstellbar zu sein, sodass jeweilige Probenbehälter unterschiedlicher Größe und verschiedener Materialien jeweils einzeln von der Probenträgereinheit (6) reversibel aufnehmbar sind.

8. Probenträgervorrichtung (1) nach einem der vorhergehenden Ansprüche, wobei das erste Haltemittel (3) aus Aluminiumoxid (Aₗ₂O₃) hergestellt ist.

9. Probenträgervorrichtung (1) nach einem der vorhergehenden Ansprüche, wobei die Referenzeinheit (5) und die Probenträgereinheit (6) ohne direkten Kontakt übereinander angeordnet sind und jeweils minimal einen Durchmesser aufweisen, welcher im Wesentlichen minimal einem zweifachen Durchmesser des zweiten Halteelements (4) entspricht.

10. Probenträgervorrichtung (1) nach einem der vorhergehenden Ansprüche 4 bis 9, wobei die Probenträgereinheit (6) mittels zumindest einer ersten Steckverbindung (7) an dem ersten Halteelement (3) reversibel befestigbar ist.

11. Probenträgervorrichtung (1) nach einem der vorhergehenden Ansprüche 4 bis 10, wobei die Referenzeinheit (5) mittels zumindest einer zweiten Steckverbindung (8) an dem ersten Halteelement (3) reversibel befestigbar ist.

12. Probenträgervorrichtung (1) nach einem der vorhergehenden Ansprüche 4 bis 11, wobei das erste Haltelement (3) mittels zumindest einer Steckverbindung an dem zweiten Halteelement (4) reversibel befestigbar ist.

13. Probenträgervorrichtung (1) nach Anspruch 12, wobei die zumindest eine Steckverbindung zwischen erstem und zweiten Halteelement im Wesentlichen eine konische Form aufweist.

14. Probenträgervorrichtung (1) nach einem der vorhergehenden Ansprüche, wobei die Probenträgereinheit (6) im Wesentlichen aus einer Metallfolie beschaffen ist, wobei das Metall ausgewählt ist aus: Platin, Platinlegierung, Nickelchrom, Nickellegierung, Stahl und ähnlichen Legierungen, und wobei eine Dicke der Metallfolie zwischen 0,02 bis 3 mm, vorzugsweise zwischen 0,03 und 2 mm, vorzugsweise zwischen 0,05 bis 1 mm vorgesehen ist.

15. Probenträgervorrichtung (1) nach einem der vorhergehenden Ansprüche 4 bis 11, wobei jeweilige Steckverbindungen mit zumindest einem Keramikkleber verstärkt sind.

16. Messgerät (100) zur thermischen Probenanalyse umfassend eine Probenträgervorrichtung (1) gemäß einem der Ansprüche 1 bis 15 sowie eine Gewichtsmesseinrichtung zur Erfassung einer Probenmasse einer zu untersuchenden Probe.

17. Messgerät (100) nach Anspruch 16 ohne eine Gewichtsmesseinrichtung zur Erfassung einer Probenmasse einer zu untersuchenden Probe.
